(19) **Europäisches Patentamt**
European Patent Office
Office européen des brevets

(11) **EP 2 166 252 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(51) Int Cl.:
***F16H 1/30*** *(2006.01)*

(21) Anmeldenummer: **08016354.6**

(22) Anmeldetag: **17.09.2008**

(54) **Schneckengetriebe**

Worm gear

Engrenage à vis sans fin

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**24.03.2010 Patentblatt 2010/12**

(73) Patentinhaber: **Baumeister, Karlheinz**
**72336 Balingen-Ostdorf (DE)**

(72) Erfinder: **Baumeister, Karlheinz**
**72336 Balingen-Ostdorf (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**WO-A-02/10613      AT-U1- 6 828**
**US-A- 1 567 933     US-A- 5 387 162**

EP 2 166 252 B1

**Beschreibung**

Die vorliegende Erfindung betrifft ein koaxiales Getriebe mit mind. einer Antriebsschnecke und mind. einem Übertragungsrad und einem koaxialen Abtrieb.

Derartige koaxiale Getriebe werden häufig zur Durchführung von Bewegungen und Positioniereinstellungen bei Möbelstücken wie z.B. Tischbeinen und Betten bzw. Sesseln eingesetzt. Eine weitere wichtige Anwendung sind federunterstützte oder federlose Linearstellglieder für automotive Anwendungen wie Klappenversteller und Türversteller (so genannte motorische Gasfedern). Die üblicherweise verwendeten Antriebsmotoren weisen meist Drehzahlen um 3000 bis 18000 u/min auf, während der Antrieb selber relativ langsam ausgeführt werden soll, so dass starke Untersetzungen gefordert sind. Die Realisierung von starken Untersetzungen ist bisher nur mit mehr als einer Getriebestufe z.B. mit mehrstufigen Planetengetrieben oder mit Kombinationen von verschiedenen Getriebearten möglich gewesen.

In der US-Patentschrift US 5,387,162 wird ein Planeten-Schneckengetriebe beschrieben, in welchem ein auf einer ersten Welle integriertes Schneckenrad von einer Schneckenanordnung auf einer zweiten Welle oder einer separaten, koaxial angetriebenen Schnecken- und Schneckenrad-Anordnung angetrieben wird. Das Planeten-Schneckengetriebe umfasst zwei oder mehr Schneckenräder, die mit einer ringartigen inneren Schneckenanordnung wirkgekoppelt sind, wobei eine von der ringartigen inneren Schneckenanordnung angetriebene Welle als Abtrieb vorgesehen ist.

Der US-Patentschrift US 5,387,162 offenbart alle Merkmale des Oberbegriffs des Anspruchs 1.

In der EP 1 272 778 B1 wird ein Antrieb beschrieben, der ein relativ komplexes Getriebe mit einer hohen Untersetzung bzw. Übersetzung aufweist, wobei das Getriebe mindestens zwei Übertragungsstufen aufweist, von denen die erste Stufe ein Schneckengetriebe mit einer Antriebsschnecke und einem Schneckenrad ist und die nachfolgende Stufe einen Antrieb aufweist, der von einem zylindrischen Ritzel gebildet ist. Bei einer bevorzugten Ausführungsform ist dabei das zylindrische Ritzel und das Schneckenrad aus einem Stück gefertigt. Trotz der zwei Übertragungsstufen bewegt sich die Untersetzung lediglich in der Größenordnung um 1:30, wobei sich die Untersetzung gleichermaßen zwischen Schnecke / Schneckenrad und Ritzel/ Kegelrad verteilt. Ein weiterer Nachteil der Anordnung besteht darin, dass der Abtrieb über ein zyl. Ritzel und ein senkrecht dazu stehendes zylindrisches Kegelrad verläuft und aufgrund dessen immer noch ein relativ hohes Geräuschniveau generiert wird.

Die vorliegende Erfindung ermöglicht zusätzlich, ein weiteres wesentliches Antriebsproblem herkömmlicher Antriebe - bei Bewegungs- und Hublastarbeiten gibt es meist eine Vorzugsrichtung bzw. Vorzugsverstellung - zu lösen. Diese sollen in eine Bewegungsrichtung einen hohen Wirkungsgrad besitzen und in der Gegenlaufrichtung eine Selbsthemmung aufweisen, d.h. einen schlechten Wirkungsgrad besitzen, um Lasten sicher zu halten ohne zusätzliche Bremselemente einzubauen. Beim bisherigen Stand der Technik werden hier z.B. Schlingfederbremsen verwendet, die auch in Richtung "Nicht Bremsen" Energie als Wärme "verbrauchen". In Bremsrichtung sind diese wiederum sehr empfindlich in der Auslegung, erwärmen sich stark und können so die Sicherheit durch ändern ihrer Eigenschaften schmälern.

Mit der vorliegenden Erfindung gelingt es, in mehreren Ausführungsformen diese bisherigen Probleme, einstufig höchste Untersetzungen zu ermöglichen und gleichzeitig eine gewünschte unterschiedliche Drehrichtungseigenschaft zum Bremsen und Halten mit einzubringen, zu lösen. Zudem ist es bei der vorliegenden Erfindung möglich, nur mittels der Geometrie der Antriebsschnecke zu bestimmen, ob Selbsthemmung oder keine Selbsthemmung gegen Rückdrehen gegeben ist.

Die Erfindung wird nachfolgend stufenweise unter Bezugnahme auf die beigefügten Zeichnungen erläutert. Dabei zeigt:

Fig . 1 eine Motorspindel-Hubeinheit mit Motor Getriebe, Bremse, Abtriebsspindel Abstützrohr und Gehäuse.

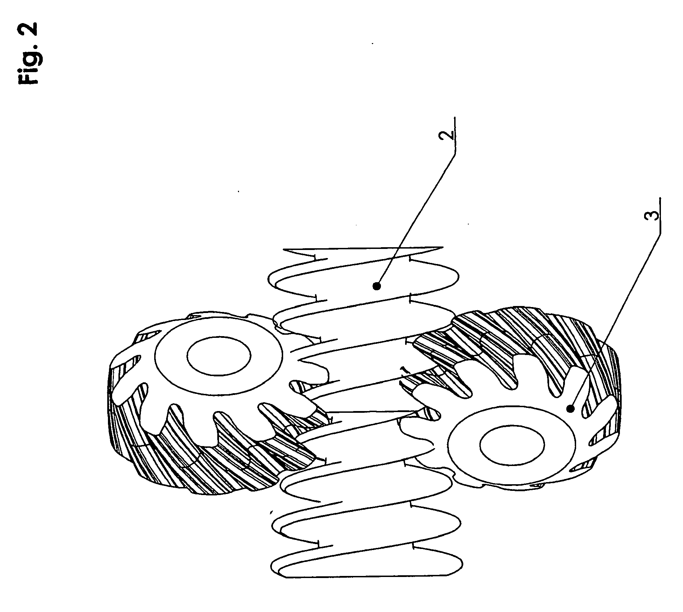

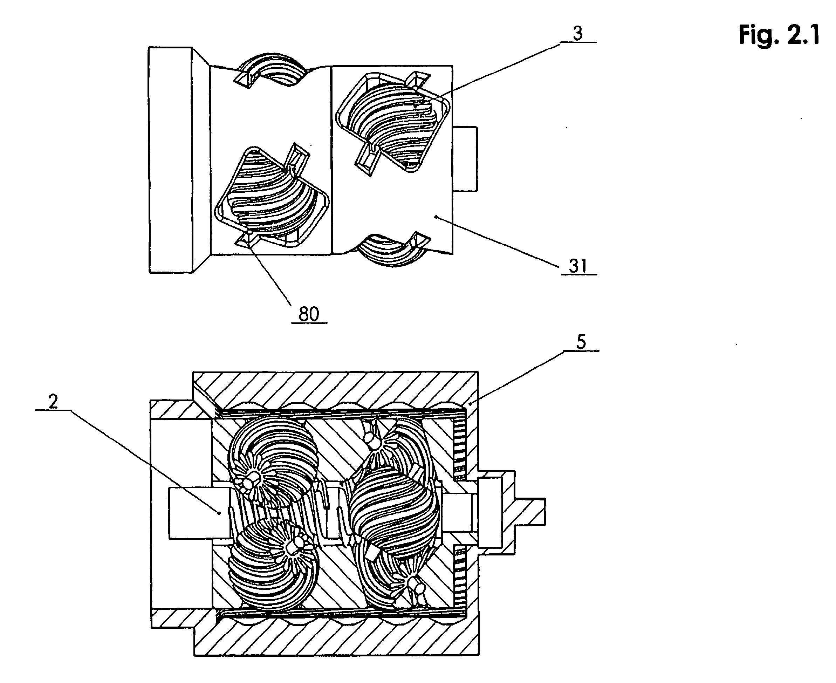

Der Motor 1 hat auf seiner Abgangswelle eine mind. eingängige Schnecke 2 drehfest verbunden. Diese Schnecke ist vorzugsweise leicht konkav ausgebildet ( Fig.2). In dieser Schnecke 2 kämmt mind. ein kugelförmiges Schneckenrad 3, welches auf einem hier nicht gezeichneten Radträger gelagert ist, welcher mit dem Lagerschild des Motors 1 fest verbunden ist.

Die Außenverzahnung der Schneckenräder 3 kämmen wiederum eine Innenverzahnung 4 eines Hohlrades 5 welches im Gehäuse 6 im Lager 7 drehbar und im Längsverschiebeglied 8 drehfest aber längsverschiebbar gelagert ist. Dreht sich nun die Schnecke 2 durch den Motor 1, bringt dieses wiederum die Schneckenräder 3 zur Drehung entsprechend dem Zähneverhältnis. Die Schneckenräder 3 bringen über den Zähneeingriff im Hohlrad 5 dieses zur Drehung und dem Antrieb der Spindel 9, die über die Mutter 10 das Abstützrohr 11 relativ zum Gehäuse 6 längs bewegt.

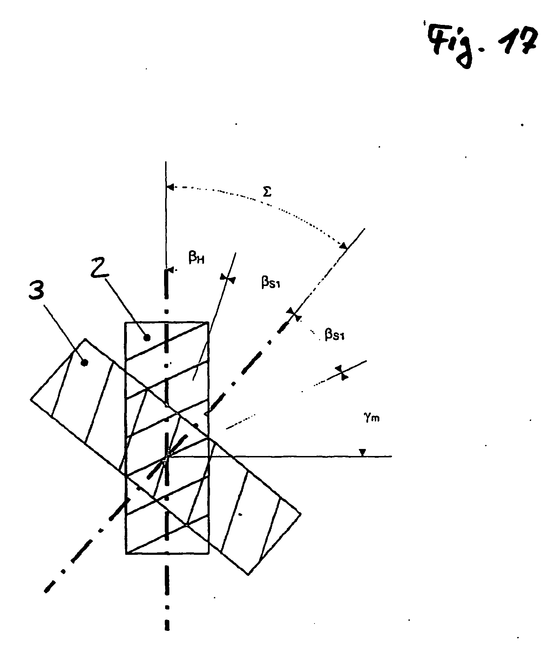

Da die Schneckenräder 3 in einem genauen geometrischen Winkel $\Sigma$, nach einer entsprechenden Formel im Anhang Fig. 17, im nicht gezeichneten Radträger gelagert sind und relativ zum Hohlrad eine Schrägverzahnung aufweisen und dadurch, bedingt durch die Zahnreibung sich eine radiale Kraftkomponente $F_{aH}$ auf das Hohlrad ergibt, bewegt sich das Hohlrad im Verschiebeglied 8 leicht längs. Diese Richtung des Verschiebens hängt von der Drehrichtung des Motors 1 ab und wird wie beschrieben nun für die drehrichtungsabhängige Bremsung des Gesamtantriebs erfindungsgemäß genutzt.

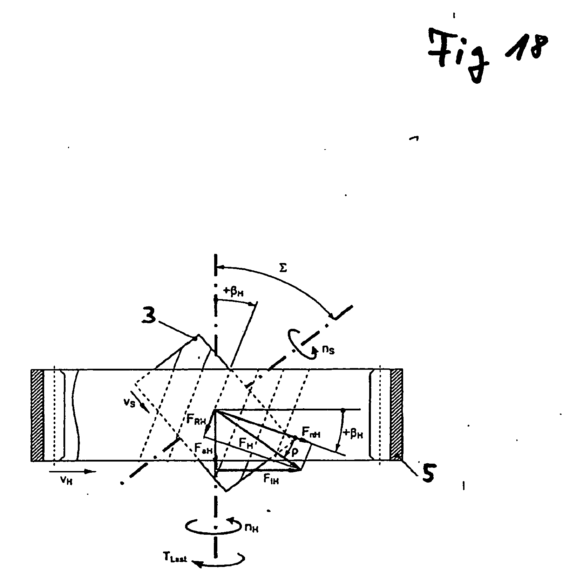

Aus der Fig. 18,19,20, 21, 22, 23, 24, 25 mit Text ergibt sich , wie mit der Veränderung des Schrägungswinkels der Hohlradverzahnung erfindungsgemäß gearbeitet werden kann, um hier die Drehrichtungseigenschaften gezielt den Antriebserfordernissen wie unterschiedliche Wirkungsgrade und Hemmungen anzupassen.

Es werden 8 verschiedene Annahmen bezüglich neg. oder pos. Hohlradschrägungswinkel erläutert, die auch bezüglich treibende oder getriebene Schnecke 2 unterscheiden. Die folgenden Fälle a) u. b) sind eine Vereinfachung der Ergebnisse aus Fig. 18 bis 25.

Fall a): Hohlrad verschiebt sich beim Antrieb des Abtriebs 9 längs in dessen Richtung. Dadurch löst sich der Reibanteil 12 der im Hohlrad fest verbunden ist, vom Reibteil 13 der fest mit dem Gehäuse 6 verbunden ist, und lässt so eine ungehemmte Bewegung mit hohem Wirkungsgrad zu, da auch die Tellerfeder 14 dies je nach Auslegung zulässt und einfedert.

Fall b): Die Drehrichtung wird umgedreht. Das Hohlrad 5 erfährt durch die Schneckenräder-Verzahnungsreibung $F_{aH}$ eine Längsbewegung in Richtung Bremsring 13. Je nach Auslegung der Reibpaarung 12 und 13 und der Federwirkung Feder 14 kann so erfindungsgemäß eine Selbsthemmung des Antriebs in eine Richtung gegeben werden. Der hier dargestellte Spindelhub mit der Spindel 9 und der Antriebsmutter 10 kann auch jede andere Antriebsaufgabe sein, die eine Drehrichtungsunterscheidung erforderlich macht.

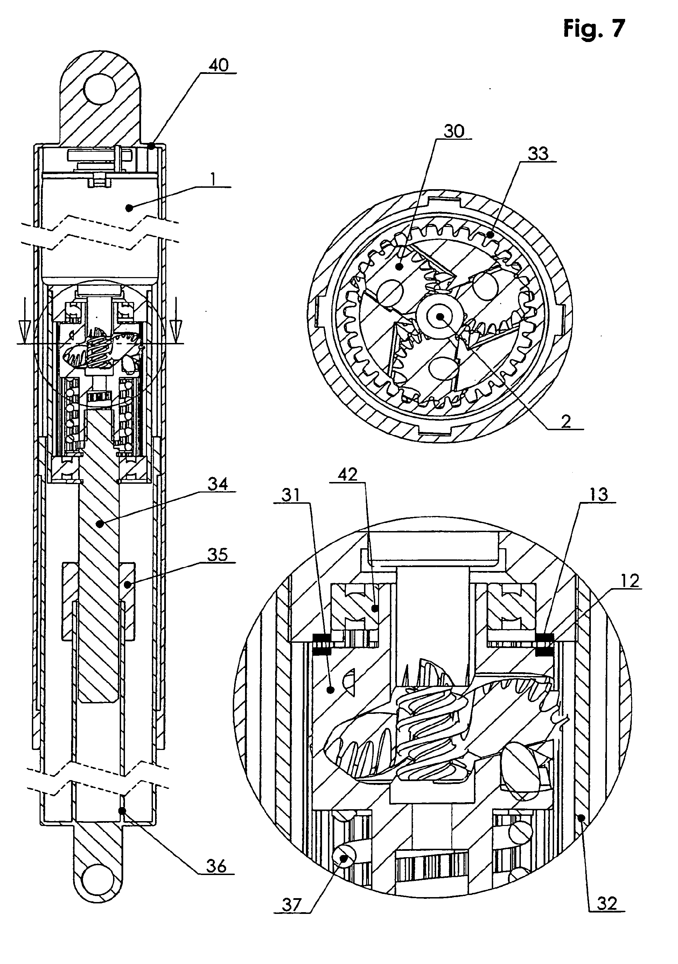

Fig 2.1 zeigt den Grundaufbau des koaxialen Kugelschneckengetriebes. Der Radträger 31, der drehend wie in Fig. 7 bis 11 sein kann oder mit dem Motor 1 wie in den anderen Fig. fest verbunden ist, trägt mind. ein kugelförmiges Schneckenrad 3. Zur Erhöhung der Getriebeleistung sind hier beispielhaft 6 Räder angeordnet, die mit ihren Achsen 80 im Träger 31 drehfest gelagert sind. Koaxial im Innern kämmen die Räder 3 eine gemeinsame Schnecke 2 oder auch drehfest verbundene einzelne Schnecken. Die Zahngeometrie der Schnecke, der Kugelschneckenräder und die Zähne bzw. der Schrägungswinkel des Hohlrades sind bezüglich der verwendeten Materialien optimiert ausgebildet. Am Außendurchmesser kämmen die kugelförmigen Schneckenräder 3 ein konzentrisch gelagertes Hohlrad 5 mit passender Innenverzahnung und einem Schrägungswinkel laut Fig. 17 u. 18 bis 25.

Die Wirkungsweisen, stehender oder drehender Radträger und drehendes oder festes Hohlrad mit den entsprechenden Wirkungen hinsichtlich Bremsen usw. geht aus den weiter beschriebenen Fig. hervor.

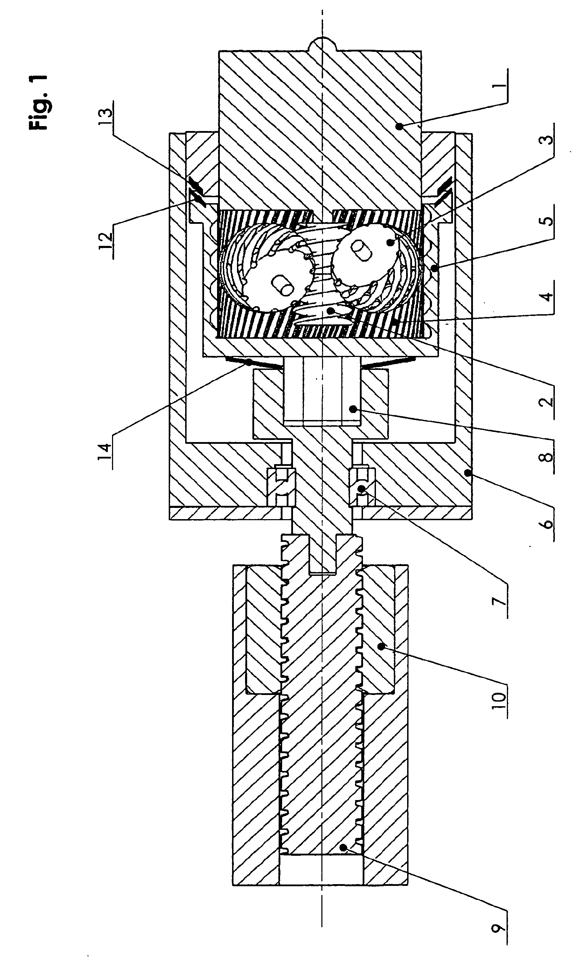

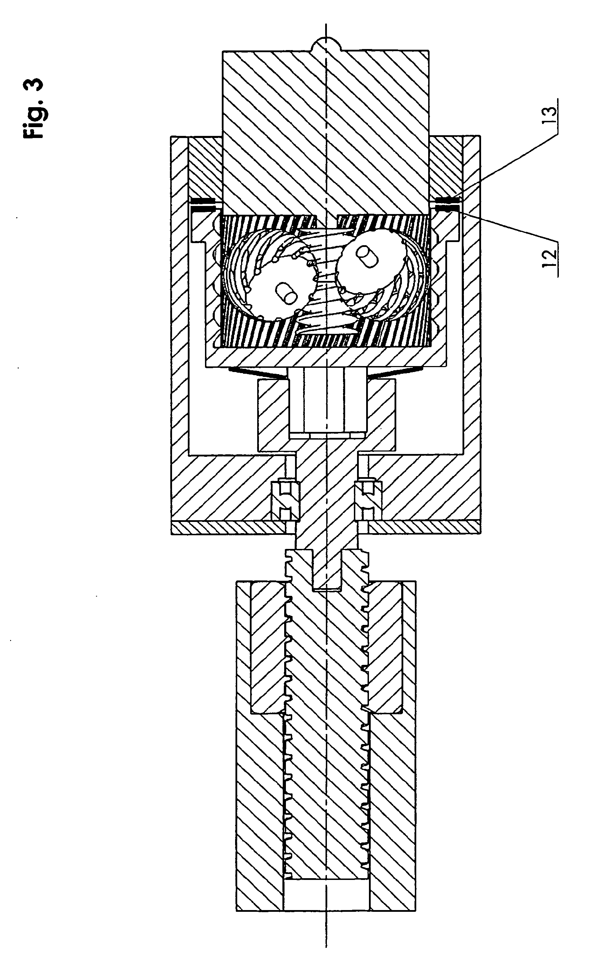

Fig. 3 zeigt eine ähnliche Wirkungsweise wie Fig. 1. Nur beträgt hier der Keilwinkel der Reibflächen 12 und 13 90 °. Mit Veränderung dieses Winkels können die Brems- und Selbsthemmungseigenschaften den Einsätzen angepasst werden.

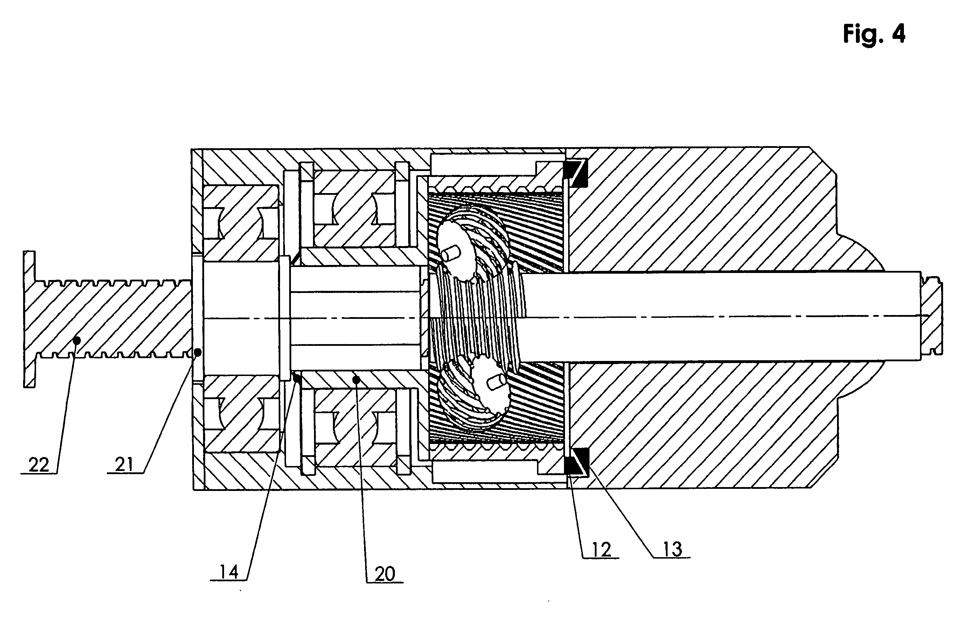

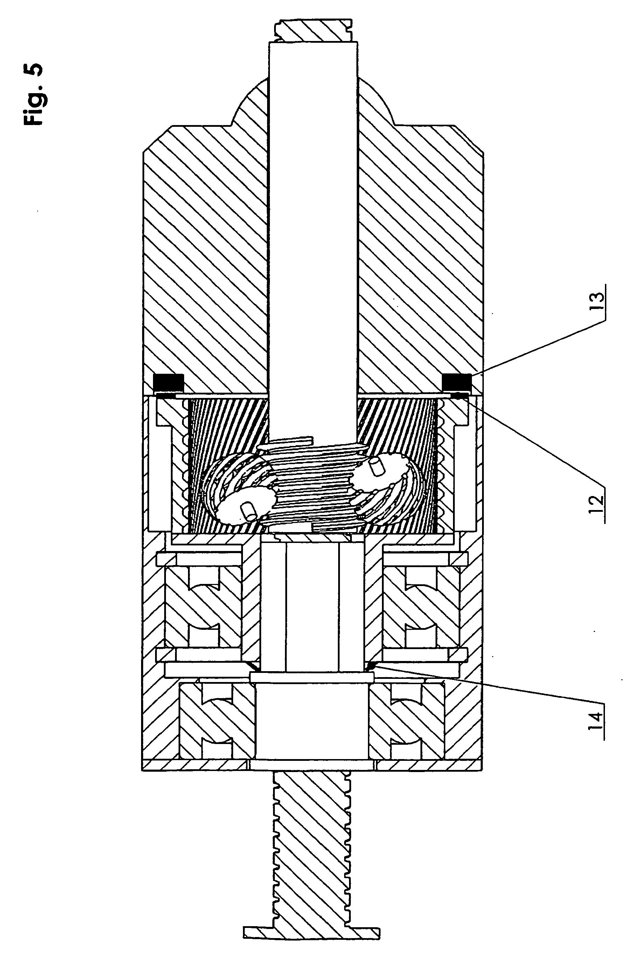

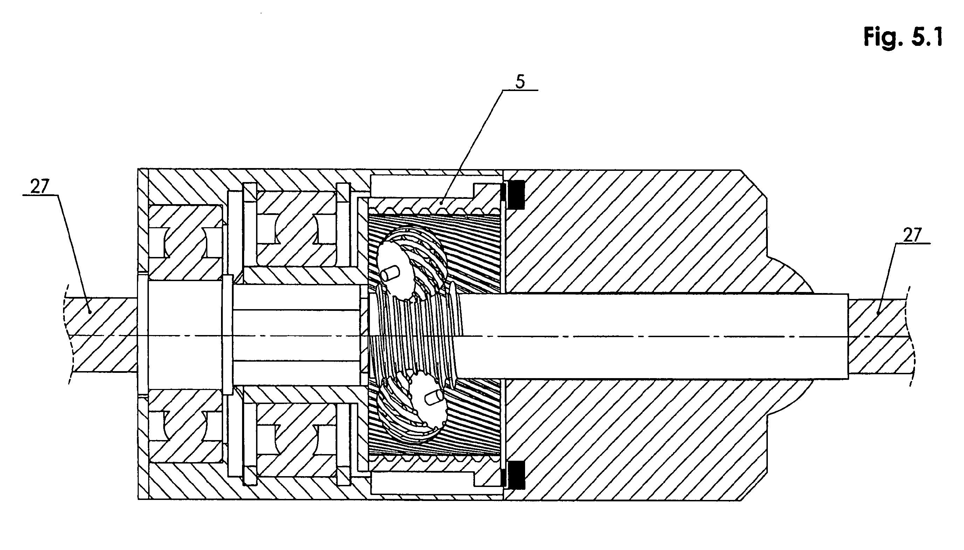

Fig. 4 und 5 zeigen ebenfalls die Schneckenradanordnung und die Bremsflächen 12 u. 13 sowie die Hilfsfeder 14. Eine erfindungsgemäße Eigenschaft kommt hier zur Ansicht, indem das Hohlrad 20 am Abtriebsende drehfest aber längsverschiebbar mit einer Spindel-Antriebsmutter 21 verbunden ist. Dieser Aufbau ermöglicht es, eine nichtdrehende Schubspindel 22 koaxial durch die komplette Antriebseinheit und das koaxiale Getriebe zu führen und so mit einem nur einstufigen Getriebe hohe Kräfte geräuscharm zu bewegen und Gesamteinbaulänge zu sparen. Wird hier anstelle der Spindel / Mutterkombination 21, 22 eine Durchgangswelle 27, drehfest mit dem Hohlrad 5 wie in Fig. 5.1 dargestellt verwendet, kann hier z.B. ein Lenksäulenüberlagerungs- bzw. Verzweigungsgetriebe mit Sicherheits-Selbsthemmung gegen ungewolltes Rückdrehen realisiert werden.

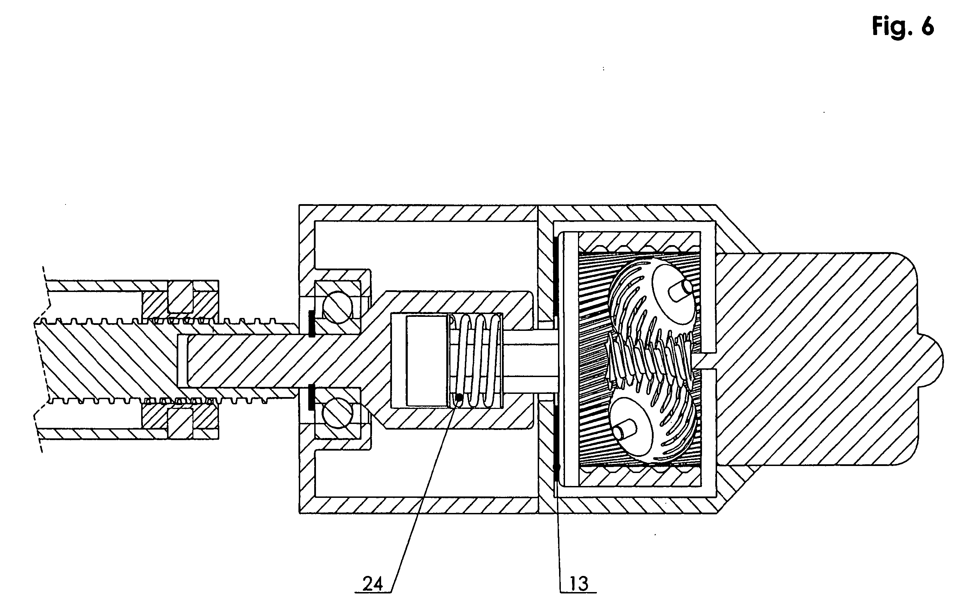

Fig. 6 entspricht der Fig. 1 und zeigt anstelle der Tellerfeder 14 hier eine Druckfeder 24 und eine Bremsreibfläche 13 unterhalb des Hohlrades angeordnet.

Fig. 7 zeigt eine Hubspindeleinheit mit der selben Konstellation wie in Fig. 1. Hier sitzt das oder die Schneckenräder 30 jedoch auf einem Radträger 31 der drehbar im Gehäuse 32 gelagert ist. Die Räder 30 kämmen somit auch die Motorschnecke 2 und ein Hohlrad 33, welches jedoch fest mit dem Gehäuse 32 verbunden ist, bzw. das selbe Teil ist. Bei Drehung des Motors kommt hier im Gegensatz zu Fig. 1 der Radträger 31 in Rotation und treibt z. B. die Spindel 34 an, so dass über die Spindelmutter 35 und das Schubrohr 36 diese eine Längsbewegung zu den Befestigungsaugen 37 u. 38 erfolgt. Hier kann erfindungsgemäß nicht nur die Schrägverzahnung der Schneckenräder zur Bremsung an den Reibflächen 12 u. 13 genutzt werden, sondern vielmehr auch die Kraftkomponente in Längsrichtung, die vom Eingriff der Schnecke 2 und der Räder 30 und somit auf den verschiebbaren Träger 31 resultiert. Abhängig ist diese Längsverschiebekraft FI vom Steigungswinkel $\gamma_m$ der Schnecke 2 und der Summe der anliegenden Umfangskräfte der Schneckenräder sowie dem Reibfaktor $\mu$.

Da die Schnecke hier verschiebefest mit dem Motor 1 verbunden ist, verschiebt sich der Radträger 31 entsprechend längs gegen oder entgegen der Bremsanlegefeder 37 innerhalb seiner Verschiebelagerung 42. Vorzugsweise wird die Spindel 34 vom treibenden Radträger 31 mittels eines gummiartigen nicht gezeichneten Teils wegen Geräuschunterdrückung drehfest verbunden

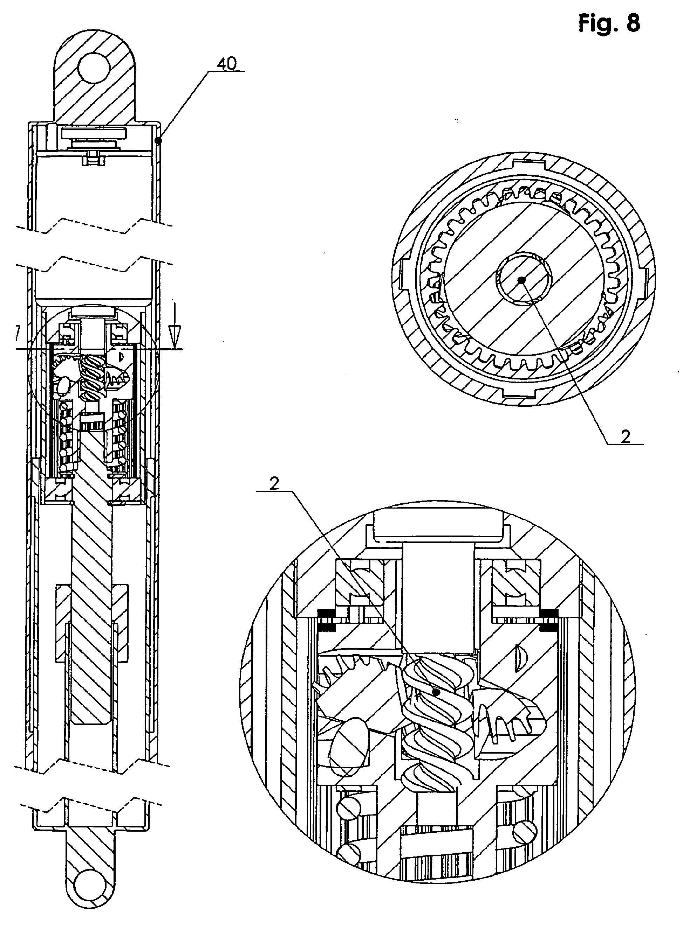

Fig.8 zeigt selbiges wie Fig. 7 mit folgendem Unterschied: Da die Schnecke 2 einen Drall in entgegengesetzter Richtung aufweist, unterscheidet sich die Wirkung bezüglich Bremsung oder Hemmung in Ein- oder Ausfahrrichtung der Motorschubeinheit 40.

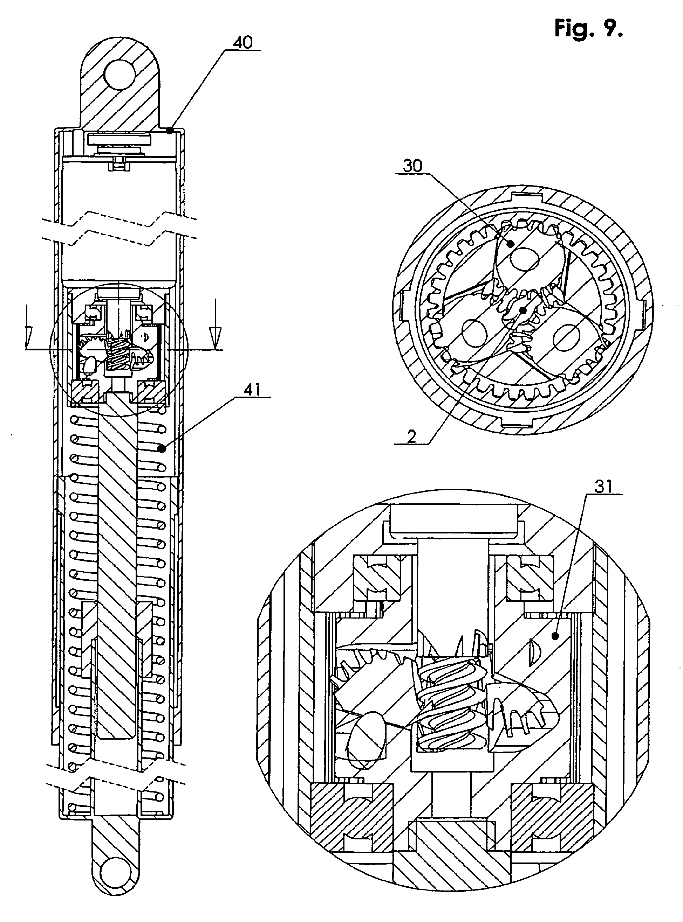

Fig. 9 zeigt einen Antrieb nach Fig. 7 u. 8 jedoch ohne Bremse, jedoch aber mit einer eingebauten Zusatzfeder 41, die je nach Anwendung dem Antrieb eine Vorzugsbewegung bzw. Hilfskraftunterstützung beim Ausfahren ermöglicht. Je nach Art der Auslegung des Scheckentriebs und der Untersetzung kann hier erfindungsgemäß eine ein oder zweiseitige Hemmung eingebracht werden.

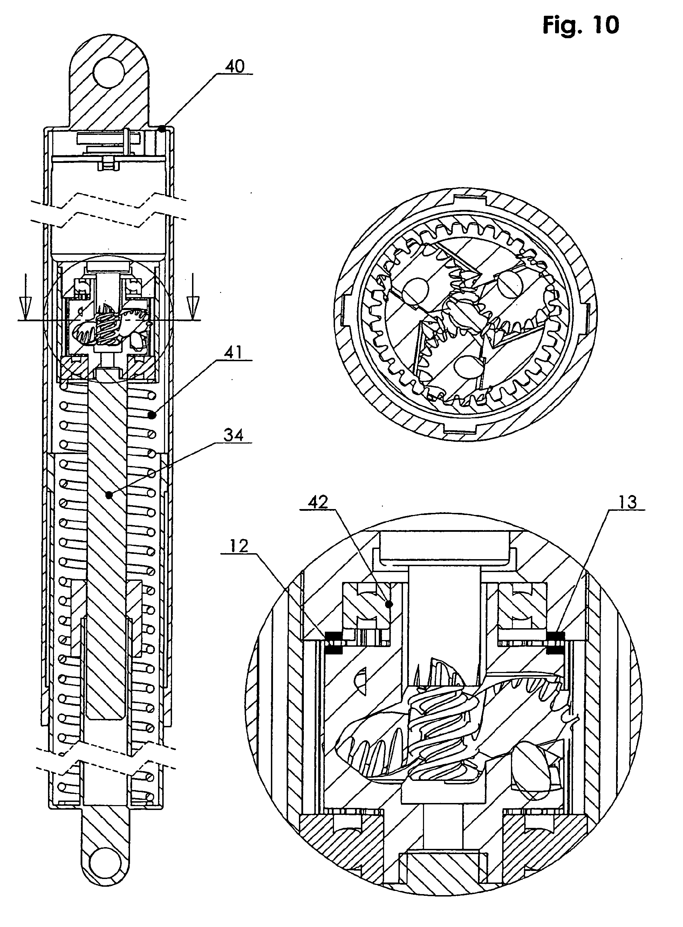

Fig 10 zeigt selbiges wie Fig. 9. Hier ist jedoch wie in Fig. 7 u. 8 eine Bremse 12, 13 vorgesehen. Diese wirkt hier jedoch nicht durch Reaktionskräfte des Schneckenrades zur Schnecke bzw. durch die Reibkräfte der Schneckenräder auf das Hohlrad, sondern alleine durch die Längswirkkräfte der Schubspindel 34 bzw. der kpl. Schubeinheit 40, da die Spindel kraftdurchgängig mit dem Radträger längsverschiebbar in 42 drehfest verbunden ist.

Die Gesamtwirkung Einfahren- Ausfahren kann mit der Zusatzfeder 41 verändert werden.

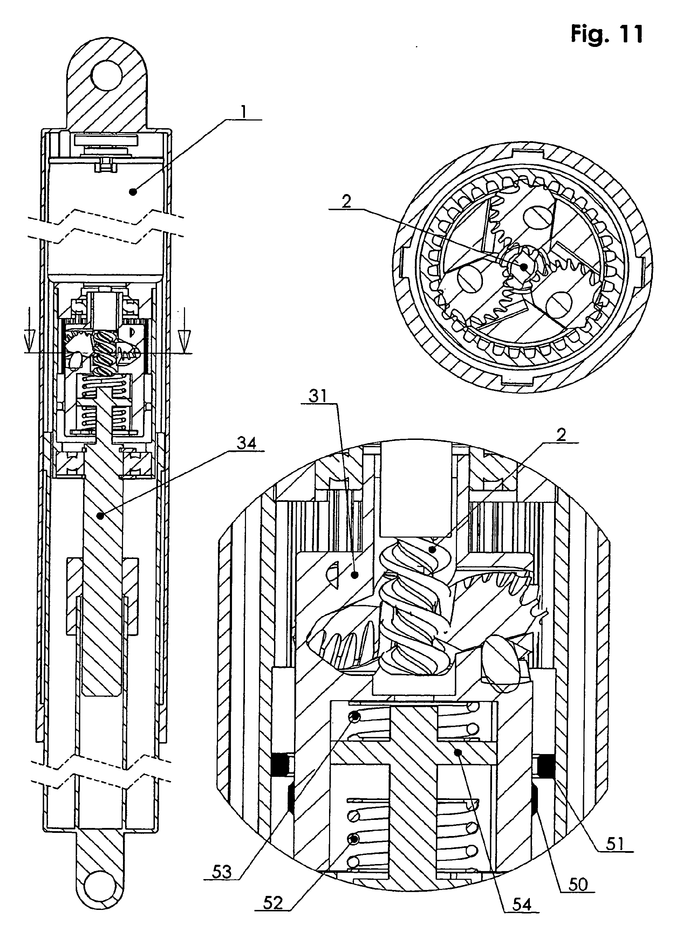

Fig. 11. Hier werden wie in Fig. 7 u. 8 die Axial-Wirkkräfte des koaxialen Getriebes genutzt und der entstehende Längsverschiebeweg des Radträgers 31 zum Bremsen und lösen der Bremse 51 verwendet.

Steht der Motor 1 mit seiner Schnecke 2 still, so halten die Federn 52 u. 53 über die Scheibe 54 den Radträger 31 in seiner mittleren Lage wie in der Gesamtansicht links ersichtlich. Hier ist der Bremsring 50 des Radträgers 31 in der Anlage mit Bremsring 51 und hemmt so eine Dreh- und Schubbewegung des Radträgers und der verbundenen Spindel 34. Diese Bremsung von 50 zu 51 wird dann durch Längsverschiebung des Radträgers 31 aufgehoben, wenn die Schneckenreaktionskräfte nach Anlauf des Motors 1 wirken. Je nach Links oder Rechtslauf verlässt der Bremsring 50 den Bremsring 53 nach oben oder unten und gibt den ungehemmten Antrieb frei. Wird der Motor gestoppt, bringen die Federn 52 u. 53 den Radträger 31 wieder in die mittlerer Bremslage und die Bremsung kann wieder wirken.

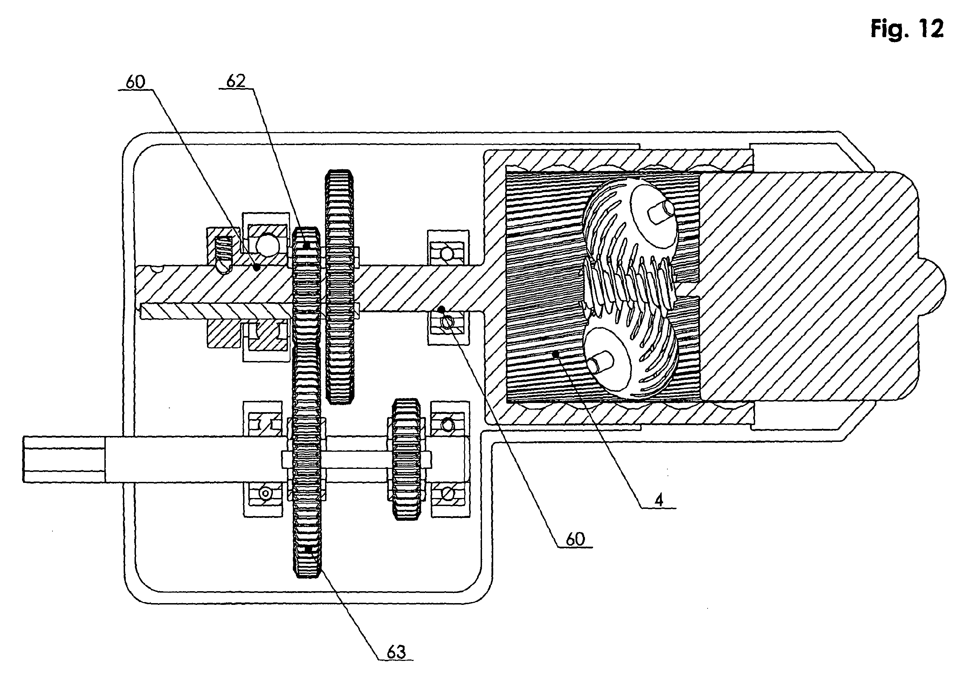

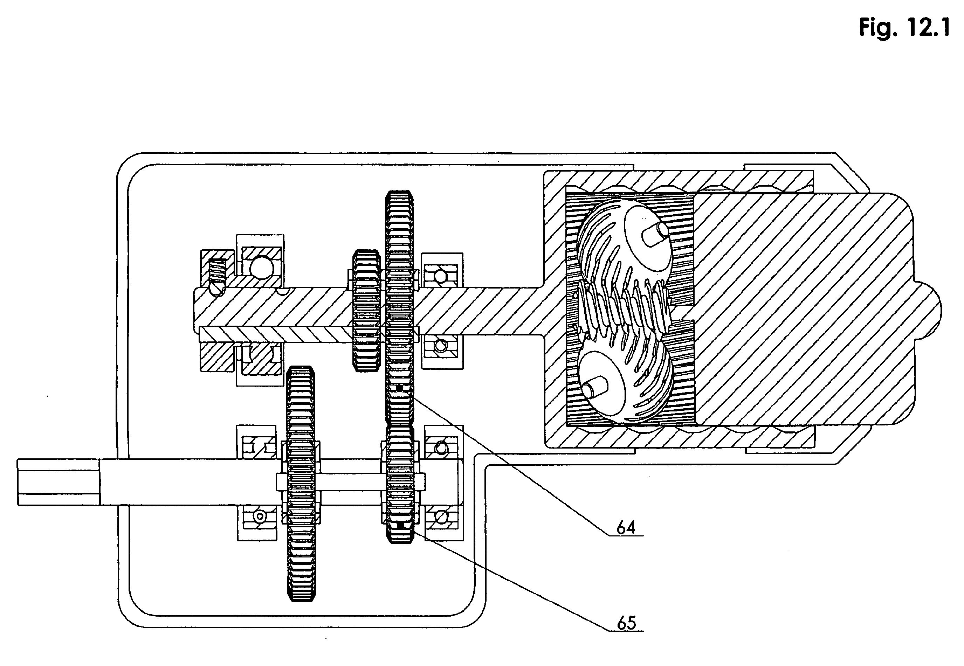

Fig.12 zeigt eine weitere Anwendung des koaxialen Schneckengetriebes, bei dem die Axialkräfte, resultierend durch die Schrägverzahnung 4 des Hohlrades 5 genutzt werden. Das Hohlrad ist innerhalb der Lagerung 60 u. 61 längsverschiebbar und kann so je nach Rechts - oder Linkslauf entweder das Rad 62 mit dem Rad 63 in Eingriff, oder das Rad 64 mit dem Rad 65 in Fig. 12.1 in Eingriff bringen. Hierdurch ergeben sich ohne aufwendige elektronische Regelungen für Vor - und Rücklauf geeignete Unter- oder Übersetzungen am Abtrieb.

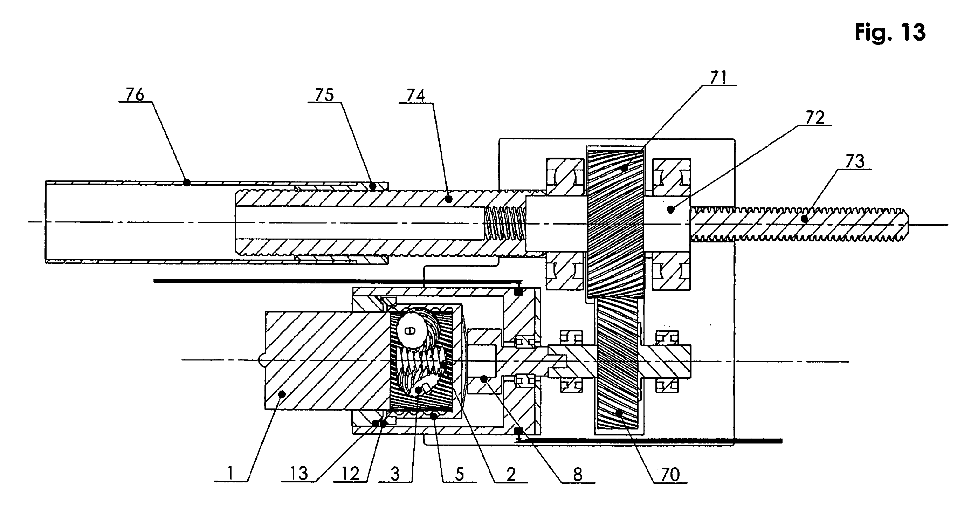

Fig. 13 zeigt eine weitere Anwendung, bei der es möglich ist, mit einem nur einstufigen koaxialen Kugelschnek- ken-Getriebe mit Bremse wie in Fig. 1 beschrieben und einer weiteren Getriebestufe eine doppelwirkende Spindel anzutreiben und somit bei kleinster Einbaulänge höchste Verstellbewegungen beispielsweise für Möbelfüße oder sonstigen Teleskopantriebe zu erreichen.

So kann bei dem skizzierten Aufbau nach Fig.13 bei einer Einbaulänge von 200 mm ca. 280 mm Verstellhub gefahren werden.

Der Motor 1 treibt über die Schnecke 2 und die balligen Zwischenräder 3, die in einem nicht gezeichneten Radträger gelagert sind, das Hohlrad 5 an.

Dieses Hohlrad 5 ist im Übertragungselement 8 drehfest, aber längsverschiebbar gelagert.

Wie unter Fig. 1 u.a. beschrieben, kann nun das Hohlrad mit seinen Bremsflächen 12 u. 13 eine drehrichtungsabhänige Selbsthemmung für den Gesamtantrieb erzeugen.

Über das Antriebsrad 70 und 71 wird nun eine Spindelmutter 72 direkt angetrieben, die eine drehfeste Gewindespindel 73 dadurch in Längsbewegung versetzt. Am anderen Ende der Spindelmutterlagerung 72 ist drehfest eine Hohlspindel 74 verbunden, die einen gegenüber der Spindel 73 umgedrehten Drehsinn in der Gewindesteigung besitzt. Die Hohlspindel 74 ist umgeben von einer weiteren Spindelmutter 75, fest gehalten im Schubrohr 76. Bei dieser kompakten Ausführung verdoppelt sich nun der erzeugte Verstellweg, da die Spindel 73 und das drehfest gehaltene Schubrohr 76 ineinander fahren können und den jeweils entgegengesetzten Verstellweg fahren.

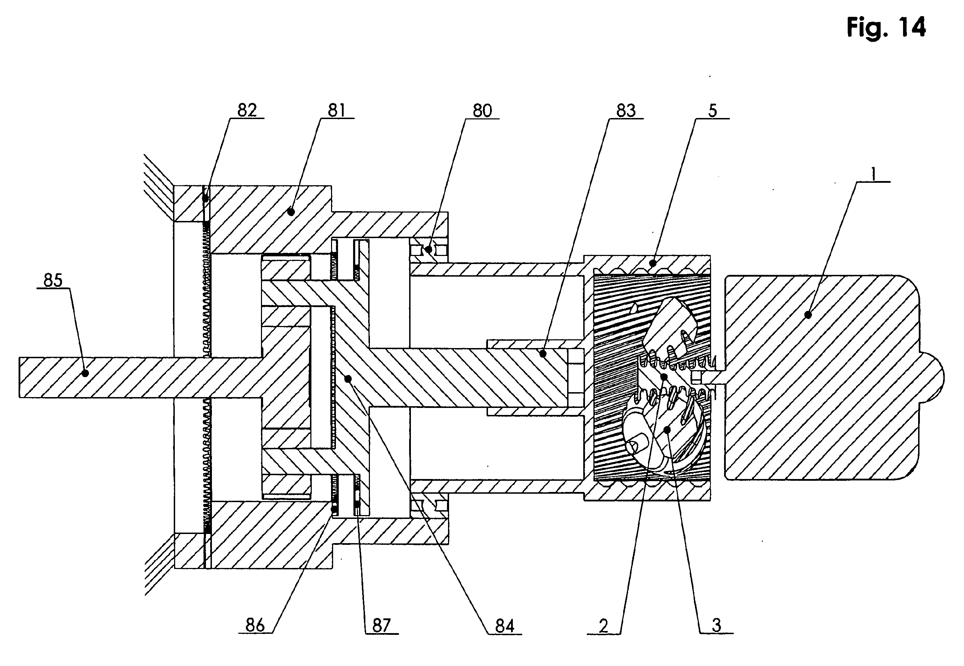

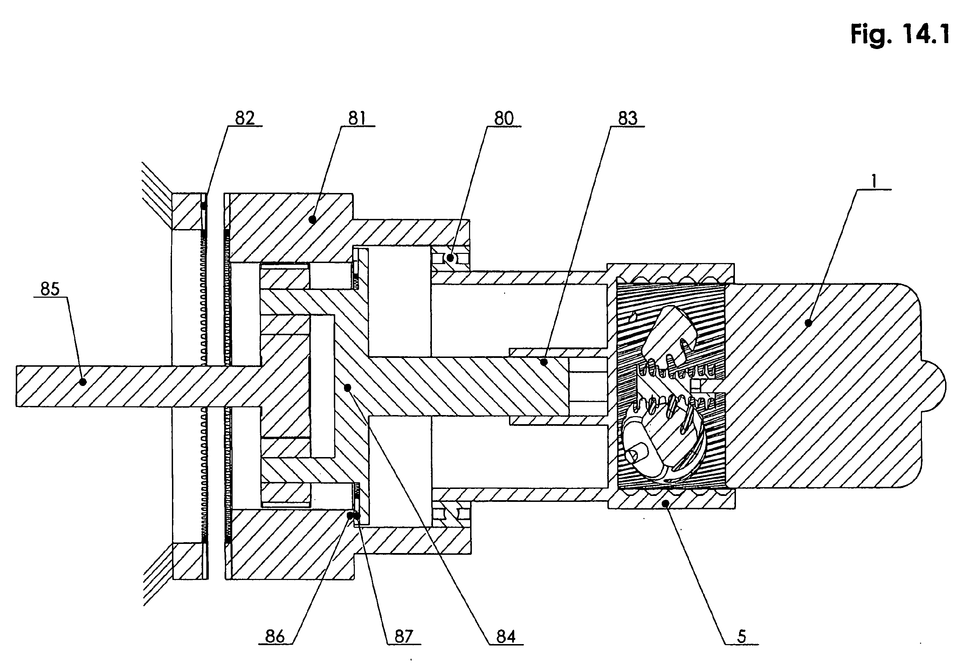

Fig. 14 zeigt zunächst ähnlich wie Fig. 12 u. 12.1 einen Antriebsmotor 1 und das mehrfach beschriebene koaxiale Schneckengetriebe mit der Axialkraftwirkung des Hohlrades .

Die Räder 3 die von der Schnecke 2 angetrieben werden bringen das Hohlrad 5 in Rotation. Durch die Wirkung der extremen Schrägverzahnung kann das Hohlrad 5 eine Längsbewegung ausführen. Wird nun z. B. das Hohlrad 5 nach links verschoben, wird über das Lager 80 das in einem nicht gezeichneten Gehäuse drehbar aber verschiebbar gelagerte Hohlrad 81 ebenfalls nach links verschoben und rastet an einer Seite in eine gehäusefeste Verzahnung 82 ein und macht es drehfest. Der drehfeste aber verschiebbare Mitnehmer 83 überträgt die Drehbewegung des Hohlrades 5 auf den Planetenträger 84 und es wirkt ein Planetengetriebe mit stehendem Hohlrad 81 über das Abtriebsrad Sonnenrad 85. Das Resultat ist ein vom Koaxialgetriebe geschaltetes Planetengetriebe. Die Untersetzung von der Kugelschnek- kenstufe addiert sich in einer Drehrichtung mit der des Planetengetriebes.

Fig. 14.1 zeigt die gegenläufige Drehrichtung zu Fig.14.

Hier schiebt sich das Hohlrad 5 nach rechts und nimmt so über das Lager 80 das Hohlrad 81 mit. Dieses verlässt so die Arretierverzahnung 82 des Gehäuses und bringt es hingegen in seiner rechten Position mit der Verzahnung 86 in die Gegenverzahnung 87 des Planetenträgers 84 in drehfesten Eingriff.

Nun ergibt sich über den Antrieb des Hohlrades 5 und dem Mitnehmer 83 auf den Planetenträger 84 und dem verbundenen Hohlrad 81 eine durchgehende starre Verbindung bis zum Sonnenrad 85 mit der Untersetzung 1:1.

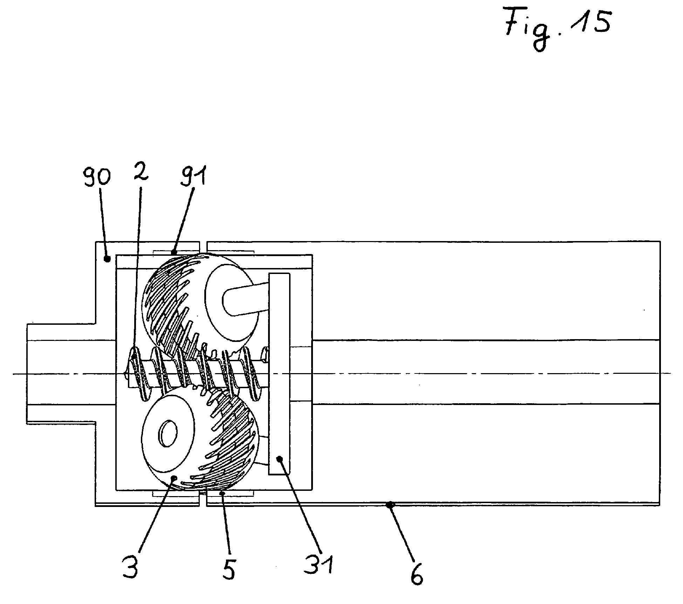

Fig.15 zeigt eine weitere Ausführungsart des Kugelschneckengetriebes. Das Gehäuse 6 hat im Innern die gehäusefeste Hohlradverzahnung 5 auf der die Schneckenräder 3, gehalten vom Radträger 31 und mit diesem umlaufen. Die Untersetzung ergibt sich aus der Zähnezahl Schnecke 2 und der Zähnezahl der Verzahnung 5. (z.B. 1: 50).

Da nun ein weiteres Hohlrad 90, drehbar gelagert zum Gehäuse 6 ebenfalls von den umlaufenden Kugelschneckenrädern 3 gekämmt wird, entsteht eine weitere Untersetzung mit dem Verhältnis der Zähnezahl von Verzahnung 5 zu Verzahnung 91 am Abtrieb vom Hohlrad 90. ( z. B. in Summe 1: 1250)

Mögliche Bremsen, wie beschrieben, sind hier der Einfachheit halber nicht eingezeichnet.

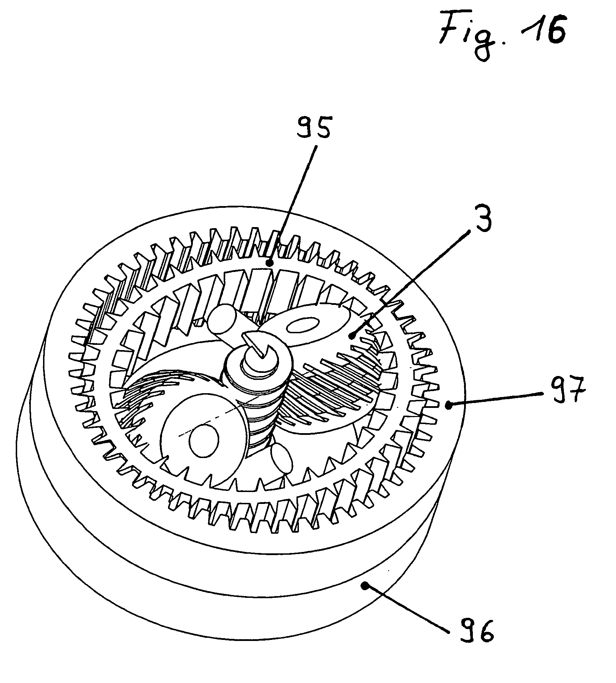

Fig.16 zeigt eine weitere mögliche, zweite Getriebestufe zusammen mit dem Kugelschnecken-getriebe. Hier wälzen sich z.B. zwei Schneckenräder 3 an einem so genannten Flexring 95 ab, der wiederum mit seiner Außenverzahnung in zwei Hohlrädern 96 u. 97 abläuft, die eine kleinste Abweichung der Zähnezahl zueinander haben.

Wird eines der beiden Hohlräder 96 u. 97 festgehalten, ist das jeweils andere Hohlrad das Abtriebsrad mit hoher Untersetzung. z.B. 1: 50 x 1: 40 = 1: 2000.

Fig.17 zeigt eine Schnecke 2 und ein Schneckenrad 3, mit

$\Sigma$:      erforderlicher Achswinkel zwischen Schnecke und Schneckenrad

$\beta_H$:      gewünschter Schrägungswinkel am Hohlrad

$\beta_{S1}$:      erforderlicher Schrägungswinkel am Schneckenrad

$\gamma_m$:      Mittensteigungswinkel der Schnecke

Ermittlung der erforderlichen Größen:

$$\Sigma = 45° - \frac{\gamma}{2} + \frac{\beta_H}{2}$$

$$\beta_{S1} = \Sigma - \beta_H$$

Fig. 18 zeigt ein Schneckenrad 3 und ein Hohlrad 5 und ein Kraftverhältnis im Fall1 mit:

$$\tan(\beta_H + \rho) = \frac{F_{aH}}{F_{tH}} \qquad \Rightarrow \qquad F_{aH} = F_{tH} * \tan(\beta_H + \rho)$$

wobei Fall 1 wie folgt definiert ist:

- Schrägungswinkel $\beta_H$ positiv (Verzahnung rechtssteigend)
- Hohlrad wird von Schneckenrad angetrieben ($F_{tH}$ in Richtung $v_H$)
- Bewegungsrichtung des Hohlrads: rechtsdrehend

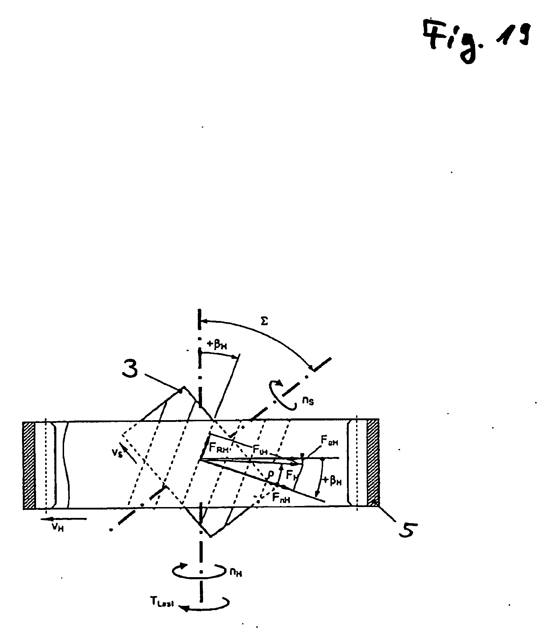

Fig.19 zeigt das Schneckenrad 3 und das Hohlrad 5 und ein Kräfteverhältnis im Fall 2

$$\tan(\beta_H - \rho) = \frac{F_{aH}}{F_{tH}} \qquad \Rightarrow \qquad F_{aH} = F_{tH} * (\tan\beta_H - \rho)$$

wobei Fall 2 wie folgt definiert ist:

Ähnlich wie Fall 1, jedoch wird hier das Hohlrad durch das Lastmoment $T_{Last}$ angetrieben, so dass sich die Drehrichtungen der Räder umkehren.

- Schrägungswinkel $\beta_H$ positiv (Verzahnung rechtssteigend)
- Hohlrad treibt Schneckenrad an ($F_{tH}$ entgegen Richtung $v_H$)
- Bewegungsrichtung des Hohlrades: linksdrehend

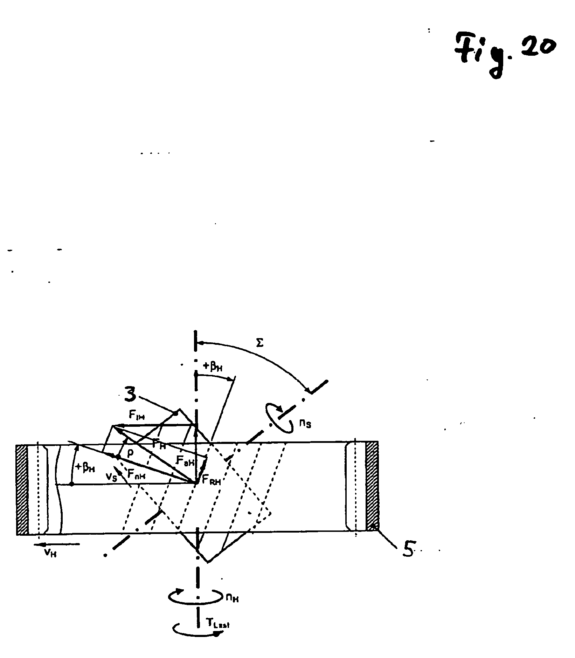

Fig.20 zeigt das Schneckenrad 3 und das Hohlrad 5 und ein Kräfteverhältnis im Fall 3

$$\tan(\beta_H + \rho) = \frac{F_{aH}}{F_{tH}} \qquad \Rightarrow \qquad F_{aH} = F_{tH} {}^{*} \tan(\beta_H + \rho)$$

wobei Fall 3 wie folgt definiert ist:

Ähnlich wie Fall 1, nur sind hier die Bewegungsrichtung des Hohlrades und die Wirkrichtung des Lastmomentes $T_{Last}$ entgegengesetzt gerichtet.

- Schrägungswinkel $\beta_H$ positiv (Verzahnung rechtssteigend)
- Hohlrad wird von Schneckenrad angetrieben ($F_{tH}$ in Richtung $v_H$)
- Bewegungsrichtung des Hohlrades: linksdrehend

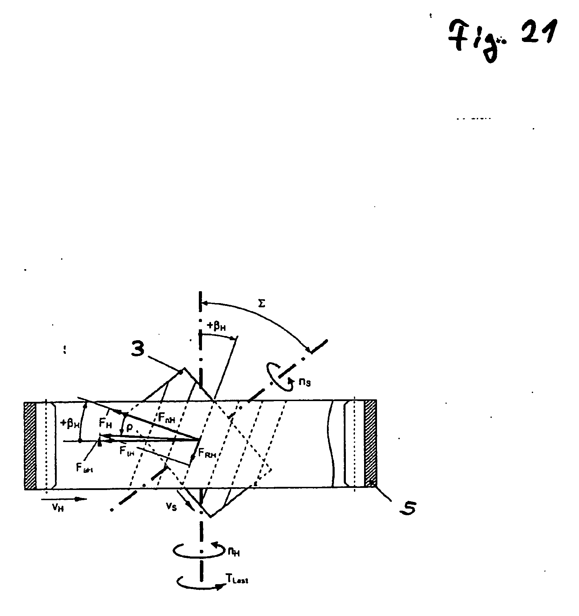

Fig.21 zeigt das Schneckenrad 3 und das Hohlrad 5 und ein Kräfteverhältnis im Fall 4

$$\tan(\beta_H - \rho) = \frac{F_{aH}}{F_{tH}} \qquad \Rightarrow \qquad F_{aH} = F_{tH} * \tan(\beta_H - \rho)$$

wobei Fall 4 wie folgt definiert ist:

Ähnlich wie Fall 3, jedoch wird hier das Hohlrad durch das Lastmoment $T_{Last}$ angetrieben, so dass sich die Drehrichtungen der Räder umkehren.

- Schrägungswinkel $\beta_H$ positiv (Verzahnung rechtssteigend)
- Hohlrad treibt Schneckenrad an ($F_{th}$ entgegen Richtung $v_H$)
- Bewegungsrichtung des Hohlrades: rechtsdrehend

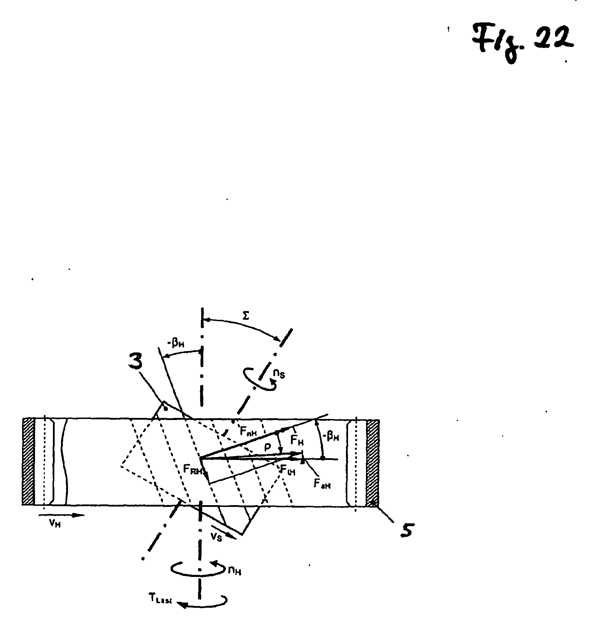

Fig.22 zeigt das Schneckenrad 3 und das Hohlrad 5 und ein Kraftverhältnis im Fall 5

$$\tan(\beta_H + \rho) = \frac{F_{aH}}{F_{tH}} \qquad \Rightarrow \qquad F_{aH} = F_{tH} * \tan(\beta_H + \rho)$$

wobei Fall 5 wie folgt definiert ist:

Ähnlich wie Fall 1, jedoch hier mit negativem Schrägungswinkel $\beta_H$

- Schrägungswinkel $\beta_H$ negativ (Verzahnung linkssteigend)
- Hohlrad wird von Schneckenrad angetrieben ($F_{tH}$ in Richtung $v_H$)
- Bewegungsrichtung des Hohlrades: rechtsdrehend

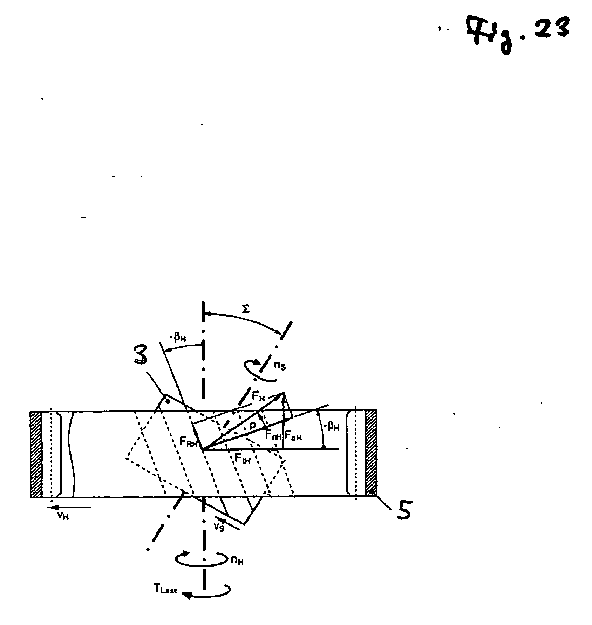

Fig.23 zeigt das Schneckenrad 3 und das Hohlrad 5 und ein Kraftverhältnis im Fall 6

$$\tan(\beta_H - \rho) = \frac{F_{aH}}{F_{tH}} \qquad \Rightarrow \qquad F_{aH} = F_{tH} * \tan(\beta_H - \rho)$$

wobei Fall 6 wie folgt definiert ist:

Ähnlich wie Fall 2, jedoch hier mit negativem Schrägungswinkel $\beta_H$

- Schrägungswinkel $\beta_H$ negativ (Verzahnung linkssteigend)
- Hohlrad treibt Schneckenrad an ($F_{tH}$ entgegen Richtung $v_H$)
- Bewegungsrichtung des Hohlrades: linksdrehend

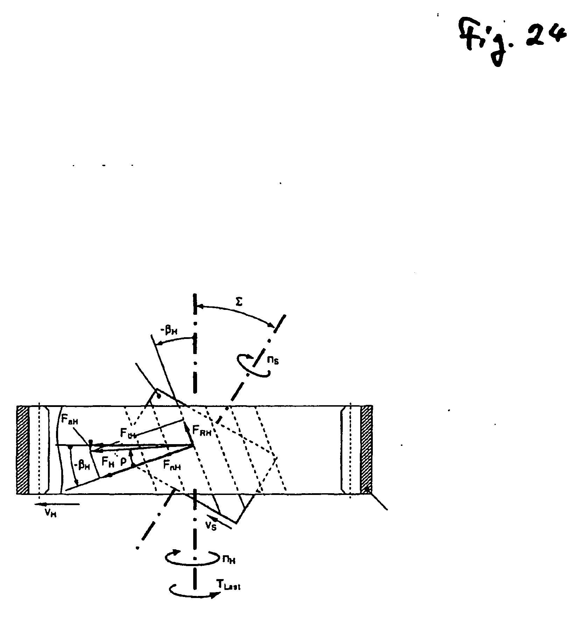

Fig.24 zeigt das Schneckenrad 3 und das Hohlrad 5 und ein Kräfteverhältnis im Fall 7

$$\tan(\beta_H + \rho) = \frac{F_{aH}}{F_{tH}} \qquad \Rightarrow \qquad F_{aH} = F_{tH} * \tan(\beta_h + \rho)$$

wobei Fall 7 wie folgt definiert ist:

Ähnlich wie Fall 3, jedoch hier mit negativem Schrägungswinkel $\beta_H$

- Schrägungswinkel $\beta_H$ negativ (Verzahnung linkssteigend)
- Hohlrad wird von Schneckenrad angetrieben ($F_{tH}$ in Richtung $v_H$)
- Bewegungsrichtung des Hohlrades: linksdrehend

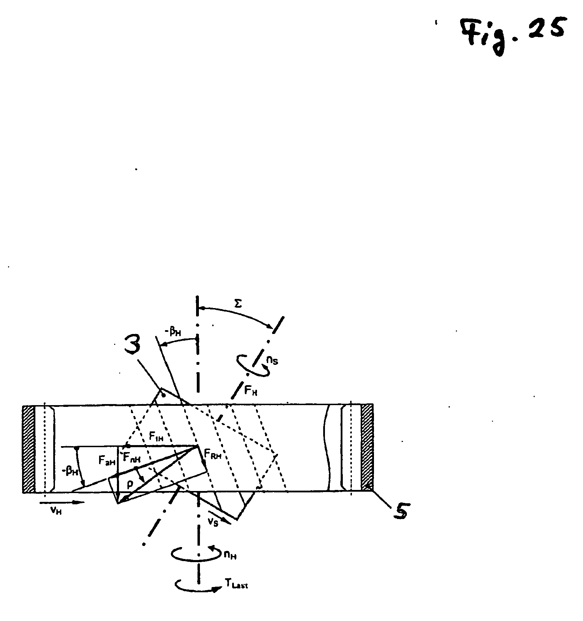

Fig.25 zeigt das Schneckenrad 3 und das Hohlrad 5 und ein Kraftverhältnis im Fall 8

$$\tan(\beta_H - \rho) = \frac{F_{aH}}{F_{tH}} \qquad \Rightarrow \qquad F_{aH} = F_{tH} * \tan(\beta_H - \rho)$$

wobei Fall 8 wie folgt definiert ist:

Ähnlich wie Fall 4, jedoch hier mit negativem Schrägungswinkel $\beta_H$

- Schrägungswinkel $\beta_H$ negativ (Verzahnung linkssteigend)
- Hohlrad treibt Schneckenrad an ($F_{tH}$ entgegen Richtung $v_H$)
- Bewegungsrichtung des Hohlrades: rechtsdrehend

**Patentansprüche**

1. Schneckengetriebe mit mindestens einer Antriebsschnecke (2) und mindestens einem kugelförmigen Schneckenrad (3), **dadurch gekennzeichnet, dass** die Verzahnung des Schneckenrades(3) sowohl in die Antriebsschnecke (2), als auch in die Schrägverzahnung eines Hohlrades (5) eingreift, und dass die Verzahnung derart konfiguriert ist, dass die damit erzeugten axialen Reibkräfte eine axiale Hohlradverschiebung oder eine axiale Verschiebung des Radträgers (31) erzeugt und den Radträger (31) oder das Hohlrad (5) in Drehung versetzt.

2. Schneckengetriebe nach Anspruch 1,
**dadurch gekennzeichnet, dass** die axiale Verschiebung des Hohlrades (5) oder des Radträgers (31) zur Bremsung oder Hemmung einer oder beider Drehrichtungen des Abtriebs genutzt werden.

3. Schneckengetriebe nach Anspruch 1 oder 2,
**dadurch gekennzeichnet, dass** Bremselemente (12, 13) koaxial angeordnet sind.

4. Schneckengetriebe nach einem der Ansprüche 1 bis 3,
**dadurch gekennzeichnet, dass** sich ein Achswinkel $\Sigma$ zwischen Schnecke (2) und Schneckenrad (3) nach folgender Berechnung ergibt:

$$\Sigma = 45° - \frac{\gamma}{2} + \frac{\beta_H}{2}$$

$$\beta_{S1} = \sum - \beta_H$$

wobei $\beta_H$ einen gewünschten Schrägungswinkel an dem Hohlrad (5), $\beta_{S1}$ einen erforderlichen Schrägungswinkel an dem Schneckenrad (3) und $\gamma$ einen Mittensteigungswinkel der Schnecke (2) darstellt.

5. Schneckengetriebe nach einem der Ansprüche 1 bis 4,
**dadurch gekennzeichnet, dass** mit der Wahl eines Steigungswinkels der Schnecke (2) über Hemmung oder Nichthemmung des Getriebes entschieden wird.

6. Schneckengetriebe nach einem der Ansprüche 1 bis 5,
**dadurch gekennzeichnet, dass** ein Abtrieb direkt eine Antriebsmutter (21) antreibt, die eine Spindel (22), welche durch einen kompletten Antrieb geführt werden kann, axial verschiebt.

7. Schneckengetriebe nach einem Anspruch 1 bis 6,
**dadurch gekennzeichnet, dass** durch einen kompletten Antrieb eine Antriebswelle (27) geführt und angetrieben werden kann.

8. Schneckengetriebe nach einem Anspruch 1 bis 7,
**dadurch gekennzeichnet, dass** die Axialverschiebung des Hohlrades (5) oder des Radträgers (31) zur Schaltung eines Planetengetriebes (81, 82, 86, 87) genutzt wird.

9. Schneckengetriebe nach einem Anspruch 1 bis 8,
**dadurch gekennzeichnet, dass** die Axialverschiebung des Hohlrades (5) oder des Radträgers (31) zur Schaltung oder zur Betätigung eines Stirnradgetriebes (60, 61, 62, 63) genutzt wird.

10. Schneckengetriebe nach einem Anspruch 1 bis 9,
**dadurch gekennzeichnet, dass** eine komplette motorische Schubeinheit mit einer Feder (41) zur Anpassung der Ein-Ausfahrcharakteristik ausgestattet werden kann.

11. Schneckengetriebe nach einem Anspruch 1 bis 10,
**dadurch gekennzeichnet, dass** achsparalell zum Antrieb Platz sparend eine Doppel-Spindeleinheit (72, 73, 74, 75, 76) angetrieben wird und so grosse Hubverstellungen möglich sind.

12. Schneckengetriebe nach Anspruch 1 bis 11,
**dadurch gekennzeichnet, dass** das Schneckengetriebe als Differenzialgetriebe ausgebildet ist, wobei die Verzahnung des Hohlrades (5) als Stator wirkt und ein Abtriebsrad eines weiteren Hohlrad (90) durch die Differenzverzahnung zu der Verzahnung des Hohlrades (5) eine zweite Getriebestufe bildet, da das Schneckenrad (3) sowohl die Verzahnung des Hohlrades (5) als auch eine Verzahnung (91) des weiteren Hohlrades (90) kämmt und diese einen Zähnezahlunterschied aufweisen.

13. Schneckengetriebe nach Anspruch 1 bis 12,
**dadurch gekennzeichnet, dass** der Radträger (31) mit mindestens einem Umlaufschneckenrad (3) einen Flexring (95) abwälzt, und somit dieser mit seiner Aussenverzahnung gegenüber einem Stator (96) und einem Abtriebsrotor (97) eine Differenzdrehung und somit eine zweite Getriebestufe erzeugt.

14. Schneckengetriebe nach einem Anspruch 1 bis 13,
**dadurch gekennzeichnet, dass** zur Erhöhung der Abtriebsleistung mehrere Radsätze (3) im Radträger (31) in Reihe untergebracht werden können.

**Claims**

1. A worm gear with at least one driving worm (2) and at least one spherical worm gear (3), **characterized in that** the teeth of the worm gear (3) engage both in the driving worm (2) and in the helical teeth of a ring gear (5), and the teeth are designed in such a way that the axial frictional forces produced by them [produce] an axial displacement of the ring gear or an axial displacement of the gear carrier (31) and [set] the gear carrier (31) or the ring gear (5) in rotation.

2. A worm gear according to claim 1, **characterized in that** the axial displacement of the ring gear (5) or the gear carrier (31) [is] used for braking or retarding one or both directions of rotation of the drive.

3. A worm gear according to claim 1 or 2, **characterized in that** the brake elements (12, 13) are arranged coaxially.

4. A worm gear according to any one of claims 1 to 3, **characterized in that** an axial angle $\Sigma$ is formed between the worm (2) and the worm gear (3) in accordance with the following calculation:

$$\sum = 45° - \frac{\gamma}{2} + \frac{\beta_H}{2}$$

$$\beta_{S1} = \sum - \beta_H$$

in which $\beta_H$ represents a desired helix angle on the ring gear (5), $\beta_{S1}$ the necessary helix angle on the worm gear (3) and $\gamma$ a centre-gradient angle of the worm (2).

5. A worm gear according to any one of claims 1 to 4, **characterized in that** the braking or non-braking of the gear mechanism is decided by the choice of gradient angle of the worm (2).

6. A worm gear according to any one of claims 1 to 5, **characterized in that** a drive directly drives a drive nut (21), which axially displaces a spindle (22) which can be guided by a complete drive.

7. A worm gear according to any one [of] claim[s] 1 to 6, **characterized in that** a drive shaft (27) can be guided and driven by a complete drive.

8. A worm gear according to any one [of] claim[s] 1 to 7, **characterized in that** the axial displacement of the ring gear (5) or the gear carrier (31) is used for shifting a planetary gear mechanism (81, 82, 86, 87).

9. A worm gear according to any one [of] claim[s] 1 to 8, **characterized in that** the axial displacement of the ring gear (5) or the gear carrier (31) is used for shifting or for actuating a spur gear mechanism (60, 61, 62, 63).

10. A worm gear according to any one [of] claim[s] 1 to 9, **characterized in that** a complete motor thrust unit can be provided with a spring (41) for adaptation of the in-out movement characteristic.

11. A worm gear according to any one [of] claim[s] 1 to 10, **characterized in that** a double-spindle unit (72, 73, 74, 75, 76) is driven in a space-saving manner axially parallel to the drive, and large stroke movements are possible in this way.

12. A worm gear according to any one [of] claim[s] 1 to 11, **characterized in that** the worm gear mechanism is designed in the form of a differential gear mechanism, wherein the teeth of the ring gear (5) act as a stator and an output gear of a further ring gear (90) forms a second gear stage by the differential teeth to the teeth of the ring gear (5), since the worm gear (3) meshes with both the teeth of the ring gear (5) and a set of teeth (91) of the further ring gear (90) and these have a difference in the number of teeth.

13. A worm gear according to any one [of] claim[s] 1 to 12, **characterized in that** the gear carrier (31) rolls over a flex ring (95) with at least one orbiting worm gear (3), and the aforesaid flex ring (95) thus produces a differential rotation and thus a second gear stage with its outer teeth with respect to a stator (96) and an output rotor (97).

14. A worm gear according to any one [of] claim[s] 1 to 13, **characterized in that** a plurality of sets of gears (3) can be accommodated in series in the gear carrier (31) in order to increase the driving power.

**Revendications**

1. Transmission à vis comportant au moins une vis d'entraînement (2) et au moins un pignon à vis (3), de forme sphérique,
   transmission **caractérisée en ce que**
   la denture de la roue à vis (3) engrène à la fois avec la vis d'entraînement (2) et avec la denture inclinée d'une roue creuse (5), et
   la denture est configurée pour que les forces axiales de frottement ainsi générées produisent un coulissement axial de la roue creuse ou un coulissement axial du support de roue (31) et font tourner le support de roue (31) ou la roue creuse (5).

2. Transmission à vis selon la revendication 1,
   **caractérisée en ce que**
   le coulissement axial de la roue creuse (5) ou du support de roue (31) est utilisé pour freiner ou retenir l'un ou les deux sens de rotation de la sortie.

3. Transmission à vis selon la revendication 1 ou 2,
   **caractérisée en ce que**
   des éléments de frein (12, 13) sont installés coaxialement.

4. Transmission à vis selon l'une des revendications 1 à 3,
   **caractérisée en ce que**
   l'angle d'axe $\sum$ entre la vis (2) et la roue à vis (3) est donné par le calcul suivant :

$$\sum = 45° - \frac{\gamma}{2} + \frac{\beta_H}{2}$$

$$\beta_{S1} = \sum - \beta_H$$

   dans lequel
   $\beta_H$ représente l'angle d'inclinaison souhaité pour la roue creuse (5),
   $\beta_{S1}$ représente l'angle d'inclinaison nécessaire de la roue à vis (3), et
   $\gamma$ représente l'angle moyen de pente de la vis (2).

5. Transmission à vis selon l'une des revendications 1 à 4,
   **caractérisée en ce que**
   par le choix d'un angle d'inclinaison de la vis (2), on choisit entre la retenue et la non retenue de la transmission.

6. Transmission à vis selon l'une des revendications 1 à 5,
   **caractérisée en ce qu'**
   une sortie entraîne directement un écrou d'entraînement (21) qui déplace axialement une broche (22) qui peut être guidée par un entraînement complet.

7. Transmission à vis selon l'une des revendications 1 à 6,
   **caractérisée en ce qu'**
   un entraînement complet guide et entraîne un arbre d'entraînement (27).

8. Transmission à vis selon l'une des revendications 1 à 7,
   **caractérisée en ce que**
   le coulissement axial de la roue creuse (5) ou du support de roue (31) est utilisé pour commuter une transmission planétaire (81, 82, 86, 87).

9. Transmission à vis selon l'une des revendications 1 à 8,
   **caractérisée en ce que**
   le coulissement axial de la roue creuse (5) ou du support de roue (31) est utilisé pour commuter ou actionner une transmission à pignons droits (60, 61, 62, 63).

10. Transmission à vis selon l'une des revendications 1 à 9,
    **caractérisée en ce qu'**
    une unité de poussée motorisée, complète, est équipée d'un ressort (41) pour s'adapter à la caractéristique de rentrée et de sortie.

11. Transmission à vis selon l'une des revendications 1 à 10,
    **caractérisée en ce qu'**
    une unité à double broche (72, 73, 74, 75, 76) est entraînée de manière parallèle à l'axe par rapport à l'entraînement pour gagner de la place et permettre ainsi des courses de réglage aussi importantes que possible.

12. Transmission à vis selon l'une des revendications 1 à 11,
    **caractérisée en ce que**

    * la transmission à vis est une transmission différentielle, et
    * la denture de la roue creuse (5) fonctionne comme stator et une roue de sortie d'une autre roue creuse (90) constitue par une denture différente de la denture de la roue creuse (5), un second étage de transmission **en ce que** la roue à vis (3) engrène à la fois avec la denture de la roue creuse (5) et aussi avec la denture (91) de l'autre roue creuse (90) et celles-ci ont une différence de nombre de dents.

13. Transmission à vis selon l'une des revendications 1 à 12,
    **caractérisée en ce que**
    le support de roue (31) roule avec une roue à vis périphérique (3) sur au moins une bague souple (Flexring) (95) et crée ainsi une rotation différentielle et ainsi un second étage de transmission par sa denture extérieure par rapport à un stator (96) et un rotor de sortie (97).

14. Transmission à vis selon l'une des revendications 1 à 13,
    **caractérisée en ce que**
    plusieurs jeux de roues (3) sont installés dans le support de roue (31), en série pour augmenter la puissance de sortie.

**Fig. 1**

EP 2 166 252 B1

Fig. 2

Fig. 2.1

**Fig. 3**

13

12

Fig. 4

Fig. 5

Fig. 5.1

27

5

27

Fig. 6

**Fig. 7**

**Fig. 8**

40

7

2

2

**Fig. 9.**

40

30

41

2

31

**Fig. 10**

**Fig. 11**

Fig. 12

Fig. 12.1

64

65

Fig. 13

Fig. 14

Fig. 14.1

Fig. 15

Fig. 16

Fig. 17

Fig 18

Fig. 19

Fig. 20

Fig. 21

Fig. 22

Fig. 23

Fig. 24

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5387162 A
- EP 1272778 B1